# EUROPEAN PATENT APPLICATION

(11) **EP 1 985 727 A1**
(43) Date of publication of application: **29.10.2008**
(21) Application number: 08007490.9
(22) Date of filing: 16.04.2008
(51) Int. Cl.: C25B 1/04, C25B 11/03, C25B 11/04, H01M 4/86

(54) **A water electrolysis system**

(30) Priority: 26.04.2007 JP 2007116670
(71) Applicant: CHLORINE ENGINEERS CORP., Ltd., Tokyo 104-0044 (JP)
(72) Inventor: Kato, Masaaki, Tamano-shi Okayama 706-0134 (JP); Ogawa, Yusuke, Tamano-shi Okayama 706-0134 (JP)
(74) Representative: Hartz, Nikolai

(57) **Abstract**

In a water electrolysis system having an anode catalyst layer containing anode catalyst and a cathode catalyst layer containing cathode catalyst tightly attached, respectively, to each surface of a solid polymer electrolyte membrane comprising a cation exchange membrane, wherein at least one catalyst layer of said anode catalyst layer and cathode catalyst layer comprises a porous structure of anode catalyst or cathode catalyst dispersed in fluorine resin containing resin, featuring the surface of the anode catalyst layer or the cathode catalyst layer being hydrophobized and the water contact angle with the surface of the anode catalyst layer or the cathode catalyst layer of said porous structure being 90 degrees or more, whereby the transfer of gas to the counter electrode can be significantly suppressed, gas purity and current efficiency be improved, and safety operation of the electrolysis system be secured, without a major change in configuration of the water electrolysis system.

## Description

### BACKGROUND OF THE INVENTION

### Field of the Invention

This invention relates to a water electrolysis system for generating oxygen and hydrogen or for generating ozone by water electrolysis in which an anode and a cathode are tightly attached, respectively, to each surface of a solid polymer electrolyte membrane comprising a cation exchange membrane, enabling hydrogen gas or oxygen gas generated at the cathode or the anode to be suppressed against transferring to the counter electrode through the cation exchange membrane, the purity of the gases to be enhanced, and safe electrolysis operation to be secured for a long time.

### Description of the Related Art

An electrolysis system which is composed by attaching an anode and a cathode to each surface of a solid polymer electrolyte membrane comprising a cation exchange membrane has been widely used as a superior energy-effective electrolysis system for its advantages including a low electrolytic voltage, availability of direct electrolysis of pure water which is not electrolyzed by an ordinary electrolysis process because of its low electrical conductivity and compact equipment design, and commercialized as a water electrolysis system for generating electrolytic oxygen and hydrogen. The electrolysis system is also commercialized as a water electrolysis system for ozone generation which utilizes a fluorinated ion exchange membrane as an electrolyte having unique properties.
In such a water electrolysis system, attaching method between a cation exchange membrane and electrode catalyst or between electrode catalyst and a current collector is highly important for effective utilization of advantages of the present electrolysis system. The method is classified into two groups.

One is the group in which electrode catalyst is loaded directly on the surface of a cation exchange membrane, wherein the cation exchange membrane on which metal salt has been adsorbed is made contact with reducing agent in order to deposit the metal directly on the surface of the cation exchange membrane. (Refer to JP 6-41639) The cation exchange membrane/electrode catalyst structure prepared by this method shows satisfactory contact between the cation exchange membrane and electrode catalyst, but has such problems that the electrode catalyst layer is extremely thin; the electrode catalyst tends to have the concentration distribution of electrode catalyst in the direction of the cation exchange membrane thickness depending on the adsorption conditions such as concentration or temperature of metal salt solution; uniform contact with the current collector is difficult because formed electrode catalyst layer is thin; applicable electrode catalyst is limited to metals that are formable by using reducing agent.

The other is the group in which electrode catalyst is loaded on the surface of the current collector, showing no problems observed as in the first group, allowing a wider selection of electrode catalyst and enabling to form the electrode catalyst layer as thick as several tens of µm. The loading methods include a method to load electrode catalyst layer comprising metals or metal oxides directly on the current collector by such means as electrolytic plating, CVD, and sputtering; a method to load electrode catalyst layer by applying, followed by drying, paste of electrode catalyst powder mixed with resin or organic solvent and a method to load electrode catalyst layer comprising metal oxides by applying metal salt solution on the current collector, followed by thermal decomposition.

When a solution with a large specific resistance like pure water is electrolyzed by a water electrolysis system composed of the cation exchange membrane bonded with the electrode catalyst and the electrode catalyst bonded with current collector by said methods, its electrolytic reactions proceed chiefly on the surfaces interfacing three phases of the cation exchange membrane/electrode catalyst/solution (three-phase boundary). For instance, when iridium is applied as electrode catalyst of the anode and platinum-loaded carbon as electrode catalyst of the cathode, oxygen generation reaction proceeds at the anode and hydrogen generation reaction proceeds at the cathode, and generated gas bubbles grow at the three-phase boundary.

The gas bubbles which have grown to a certain size at the three-phase boundary are vented outside the electrolysis system from the three-phase boundary through the internal portion of the current collector; whereas, a portion of the generated gas moves to the counter electrode through the cation exchange membrane by concentration diffusion which applies pressure inside bubbles as driving force. For instance, in a zero-gap water electrolysis system, such phenomenon occurs that hydrogen generated at the three-phase boundary of cathode catalyst/cation exchange membrane/water reaches the anode, which is the counter electrode through the cation exchange membrane and is vented outside of the cell as a mixture with oxygen gas.
Gas transfer to the counter electrode leads to performance deterioration of the water electrolysis system in terms of decrease in purity of the gas produced as the counter electrode gas and decrease in current efficiency of gas production. Moreover, in the water electrolysis system where oxygen and hydrogen are generated, provisions of monitor units and operational vigilance against intrusion of the counter electrode gas are required for safety performance of the water electrolysis system since hydrogen and oxygen gas mixture may exceed a lower explosion limit as a result of transfer of the counter electrode gas. The relation of a bubble size vs. a surface tension of solution is expressed by Young-Laplace Equation Pg-P1= 2 γ / r (where, Pg: Pressure inside bubble, PI: Solution pressure, γ : Surface tension of solution, r: Radius of bubble). According to this equation, when the solution pressure is constant, smaller the size of bubble, pressure inside bubble that constitutes equilibrium will increase and the gas transfer driving force to the counter electrode will be intensified.

In the present invention, in order to obtain a water electrolysis system which enhances the purity of electrolytically generated gas, maintains high current efficiency and safety performance even for a long time operation, discussions have been made on hydrophilic/hydrophobic nature on the side of electrode catalyst in an attempt to suppress the amount of counter electrode gas which passes through the cation exchange membrane.
As a result, the inventors of the present invention have conceived a means to decrease the pressure inside bubble without changing surface tension of water in the water electrolysis system that if electrode catalyst with sufficient hydrophobic nature is used, a bubble attaches to electrode catalyst with a wide contact area without forming a bubble controlled by the surface tension of water, because a bubble contacts water with a large surface tension at the time of forming and constitutes pressure equilibrium between pressure inside bubble and the surface tension of solution around the bubble, as expressed by Young-Laplace Equation, but at the same time the bubble contacts the electrode catalyst and the cation exchange membrane.
In addition, the inventors of the present invention have found that at this time, the pressure inside bubble decreases as it evades control by the surface tension of water, and the driving force for the gas to transfer to the counter electrode decreases, eventually reducing the amount of gas transfer, and especially that by making the electrode catalyst layer on the cathode side hydrophobic, transfer of hydrogen whose nature is easy in concentration diffusion because of its small molecular size can be suppressed significantly.

### SUMMARY OF THE INVENTION

In order to solve said problems, the present invention has constructed a water electrolysis system having an anode catalyst layer containing anode catalyst and a cathode catalyst layer containing cathode catalyst tightly attached, respectively, to each surface of a solid polymer electrolyte membrane comprising a cation exchange membrane, wherein at least one catalyst layer of said anode catalyst layer and cathode catalyst layer comprises a porous structure of anode catalyst or cathode catalyst dispersed in fluorine resin containing resin, featuring the surface of the anode catalyst layer or the cathode catalyst layer being hydrophobized and the water contact angle with the surface of the anode catalyst layer or the cathode catalyst layer of said porous structure being 90 degrees or more.

The second method to solve said problems applies polytetrafluoroethylene as fluorine resin to be used for said porous structure in said water electrolysis system.

The third method to solve said problems applies a cathode catalyst layer containing cathode catalyst comprising said porous structure in said water electrolysis system.

The fourth method to solve said problems applies a porous structure comprising said cathode catalyst layer with platinum or platinum-loaded carbon grains dispersed in fluorine resin containing resin in said water electrolysis system.

The fifth method to solve said problems applies a porous structure comprising a porous metal plate or a sintered sheet of metallic fiber having on its surface anode catalyst containing lead dioxide or iridium in said anode catalyst layer in said water electrolysis system.

The sixth method to solve said problems applies a catalyst layer comprising said porous structure with a fluorine resin layer coated on the surface of said cathode catalyst layer in said water electrolysis system.

### BRIEF DESCRIPTION OF THE DRAWINGS

Figure 1 illustrates an example of the water electrolysis system by the present invention.
Figure 2 illustrates the contact angle of water.
Figure 3 illustrates a relation between the contact angles of water vs. concentration of hydrogen in the anode gas.

### DETAILED DESCRIPTION OF THE INVENTION AND PREFERRED EMBODIMENTS

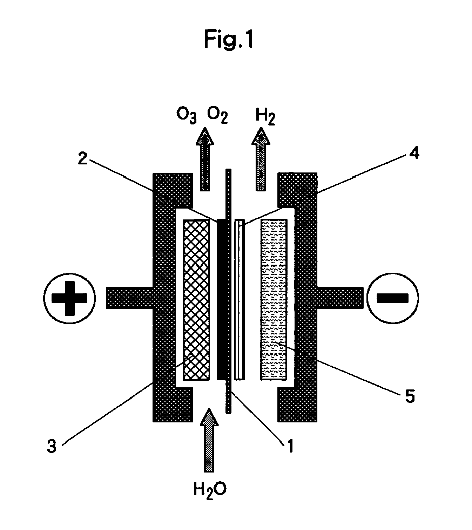

The following is an explanation of the present invention in reference to the water electrolysis system illustrated in Figure 1.
In the electrolysis system by the present invention, 1 indicates the solid polymer electrolyte membrane comprising the cation exchange membrane, for which conventionally known cation exchange membranes are widely applicable, but a preferable membrane is perfluorosulfonic acid cation exchange membrane, chemically stable with a sulfonic acid group. On the anode side surface of the solid polymer electrolyte membrane 1, the anode current collector loaded with the anode catalyst layer 2 containing anode catalyst on its surface or the anode substrate 3 are arranged in tight contact. The anode current collector or the anode substrate 3 has electrical conductivity and is corrosion resistant to oxidation, as well, allowing a structure sufficiently capable of venting generated gas and circulating electrolyte and providing availability to apply porous material, mesh, fiber, and foam with metal substrates including titanium, tantalum, niobium and zirconium.
For the anode catalyst comprising the anode catalyst layer 2, any conventionally known materials are applicable for oxygen generation, such as iridium and its oxides with a low oxygen overvoltage. For ozone generation, materials with a high oxygen overvoltage, such as lead dioxide and electrically conductive diamond are applicable.

The anode catalyst layer 2 comprises porous structure of said anode catalyst dispersed in fluorine resin containing resin, available to be loaded on the anode current collector, the anode substrate 3 by a coating method or hot press process, or to be used in sheet form of a mixture with binder components like fluorine resin or Nafion ( Registered Trade Mark of Du Pont) solution. In the above process, such considerations as the surface of the anode catalyst layer 2 is hydrophobized, applied composition is determined to obtain the water contact angle being 90 degrees or more, especially the dispersion of polytetrafluoroethylene (PTFE), a material of high hydrophobicity, functions effectively to the top surface, are paid for configuration so that gas transfer is significantly suppressed, gas purity and current efficiency are improved, safety of the electrolysis system is secured without any major change in construction of the water electrolysis system. Incidentally, the anode catalyst layer 2 can be loaded on the substrate of porous metal plate or sintered sheet of metallic fiber. Also, the anode catalyst layer 2 can be formed by such processes as electrolytic plating, thermal decomposition, coating, and hot press.

As fluorine resin used for said porous structure, various types of fluorine resin are applicable, but polytetrafluoroethylene (PTFE) is preferable.

Said anode catalyst layer 2 can be tightly attached to the surface of said solid polymer electrolyte membrane 1 by the hot press process instead of being loaded on the anode current collector or the anode substrate 3.

On the cathode side surface of the solid polymer electrolyte membrane 1, the cathode current collector or the cathode substrate 5 loaded with the cathode catalyst layer 4 containing cathode catalyst on its surface are arranged in tight contact. As the material for the cathode current collector or the cathode substrate 5, porous materials, same as the anode current collector or the anode substrate, of nickel, stainless-steel, zirconium or carbon are applicable.
For the cathode catalyst composing of the cathode catalyst layer 4, platinum, platinum black or platinum-loaded carbon, having a low hydrogen overvoltage is preferable.

The cathode catalyst layer 4 comprises porous structure of said cathode catalyst dispersed in fluorine resin containing resin, available to be loaded on the cathode current collector, the cathode substrate 5, or the base material by a coating method or hot press process, or to be used in sheet of mixture with binder components like fluorine resin or Nafion ( Registered Trade Mark of Du Pont) solution.
In the above process, such considerations as the surface of the cathode catalyst layer 4 is hydrophobized, applied composition is determined to obtain the water contact angle being 90 degrees or more, especially the dispersion of polytetrafluoroethylene (PTFE), a material of high hydrophobicity functions most effectively on the top surface are paid for configuration so that gas transfer is significantly suppressed, gas purity and current efficiency are improved, safety of the electrolysis system is secured without any major change in construction of the water electrolysis system. Incidentally, the cathode catalyst layer 4 can be loaded on the substrate of porous metal plate or sintered sheet of metallic fiber. Also, the cathode catalyst layer 4 can be formed by such processes as electrolytic plating, thermal decomposition, coating, and hot press.

As fluorine resin used for said porous structure, various types of fluorine resin are applicable, but polytetrafluoroethylene (PTFE) is preferable.

In addition, the surface of the cathode catalyst layer 4 is hydrophobized by another layer of fluorine resin provided on the surface of said cathode catalyst layer 4, thus enabling the water contact angle to be 90 degrees or more.

Said cathode catalyst layer 4 can be tightly attached to the surface of said solid polymer electrolyte membrane 1 by the hot press process instead of being loaded on the cathode current collector or the cathode substrate 5.

Composition must be prepared and construction must be arranged so that at least one of the anode catalyst layer 2 and the cathode catalyst layer 4 comprises porous structure of said anode catalyst or said cathode catalyst dispersed in fluorine resin containing resin and the surface of the anode catalyst layer 2 or the cathode catalyst layer 4 is hydrophobized so that the water contact angle becomes 90 degrees or more, especially the dispersion of polytetrafluoroethylene (PTFE), a material of high hydrophobicity, functions effectively on the top surface.

As mentioned above, when the surface of the anode catalyst layer 2 or the cathode catalyst layer 4 is hydrophobized and the water contact angle is made to be 90 degrees or more, the transfer of gas to the counter electrode can be significantly suppressed, gas purity and current efficiency be improved, and safety operation of the electrolysis system be secured, without a major change in configuration of the water electrolysis system. However, when the water contact angle was below 90 degrees, these effects were not sufficient, unable to perform expected suppression of gas transfer and improvement of gas purity.

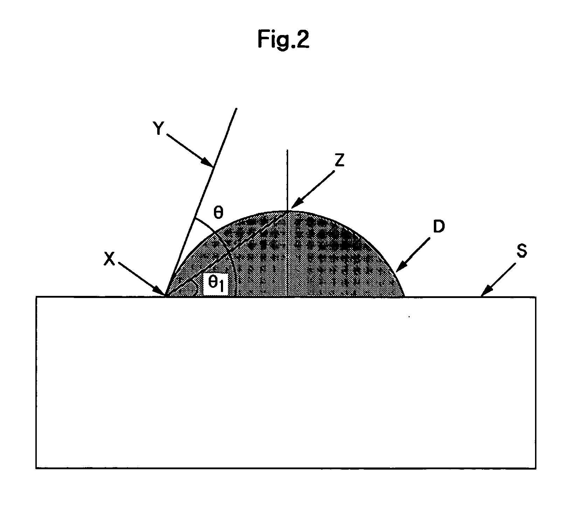

The water contact angle with the surface of the anode catalyst layer 2 or the cathode catalyst layer 4 is a value used as an index to indicate hydrophilic and hydrophobic properties of the solid surface. As shown in Figure 2, the figure of contact angle is obtained by measuring the angle formed by the surface of the aqueous droplet formed on the solid substance and the surface of the solid substance using a protractor or a contact angle meter. It is generally said that the smaller the contact angle, the larger the hydrophilic property, and the larger the contact angle, the larger the hydrophobic property or water repellency. For instance, Teflon (registered trademark), a typical hydrophobic material whose terminating group is covered with fluorine has a water contact angle of 114 degrees, and silicone resin, also known as highly hydrophobic material has high values as 90-110 degrees; whereas phenol resin having hydroxyl group, which has a high affinity with water, on its surface indicates relatively hydrophilic property at 60 degrees, even if it is a type of resin. Metals or glasses covered with oxides on their surface generally indicate low values; for instance, the contact angle for glass having a clean surface without organic contamination shows 5 degrees or below, the measurement being utilized to evaluate the contamination degrees of glass surface.
Figure 2 illustrates the detailed measurement method of the water contact angle *θ*. The contact angle is expressed as *θ* formed by the tangent Y of droplet D and the base material S at the intersection X of the base material S and droplet D. When the contact angle *θ* is measured visually using a contact angle meter, it is difficult to obtain tangent Y accurately and therefore, the angle *θ*1 formed by the line connecting the intersection X to the vertex Z of droplet D and the base material S is measured. Assuming that the droplet D is a part of arc, Equation *θ* = 2*θ* 1 is geometrically true; then, the contact angle *θ* is easily obtained even in visual observations. The contact angles in the examples and the comparative examples in the present specifications are measured by this method.

Accordingly, when only the anode catalyst layer 2 is catalyst layer comprising said porous structure and the water contact angle with the surface is 90 degrees or more, the transfer of gas on the anode side to the cathode side can be significantly suppressed, the gas purity on the cathode side and current efficiency can be improved and the operational safety of the electrolysis system can be secured; when only the cathode catalyst layer 4 is configured as above-mentioned, the transfer of gas on the cathode side to the anode side can be significantly suppressed, the gas purity on the anode side and current efficiency can be improved and the operational safety of the electrolysis system can be secured; when both of the anode catalyst layer 2 and the cathode catalyst layer 4 are configured as above-mentioned, the gas purity on both the anode side and the cathode side and current efficiency can be improved and the operational safety of the electrolysis system can be secured.
The following explanations are about the examples and the comparative examples of the present invention. The present invention, however, is not limited to these examples.

### EXAMPLE 1

A sintered sheet of titanium fiber (manufactured by Tokyo Rope Mfg. Co., Ltd.), 1 mm thick, was washed with neutral detergent for degreasing and subject to pretreatment by acid pickling with 20 wt% hydrochloric acid solution for one minute at 50 degrees Celsius; then, on the said sintered sheet of titanium fiber, a coating comprising platinum-titanium-tantalum (25-60-15 mol%) was formed by the thermal decomposition method; and thus the anode current collector or the anode substrate with an underlayer on the surface is prepared.
Using said anode current collector or anode substrate as the anode, and 400 g/l of lead nitrate solution as electrolyte, electrolysis was performed for 60 minutes at 60 degrees Celsius at the current density of 1A/dm2 to form a coating layer of β- lead dioxide, which is anode catalyst, on the anode current collector or the anode substrate surface.
A commercially available perfluorosulfonic acid type cation exchange membrane (Registered Trade Mark of Du Pont: Nafion 117, manufactured by Du Pont) was immersed in boiled pure water for 30 minutes for water-swelling treatment and used as a cation exchange membrane.
On the other hand, Cathode Sheet A was prepared in such way that PTFE dispersion (manufactured by Mitsui DuPont Fluorochemical Co., Ltd. 30-J) was mixed with aqueous dispersion in which platinum-loaded carbon catalyst is dispersed, followed by drying, and to this mixture, solvent naphtha was added and kneaded, followed by rolling, drying, and sintering to form Cathode Sheet A in porous structure comprising 40 Wt.% of PTFE, 60 Wt.% of platinum-loaded carbon catalyst, with the membrane thickness of 120 µm, and porosity of 55%.
The contact angle of Cathode Sheet A surface was measured with a contact angle meter (manufactured by Elma Model No. G-1), the result was 92 degrees.
These elements and a sintered sheet of stainless-steel fiber (manufactured by Tokyo Rope Mfg. Co., Ltd.), which was a 2.5mm thick cathode current collector, were assembled to a titanium electrolysis system in the order of Anode Compartment/Anode Current Collector/Lead Dioxide Surface/Cation Exchange Membrane/Cathode Sheet A/Cathode current collector/Cathode Compartment, and pure water electrolysis was conducted, while pure water, as electrolyte, being cooled. Then, the gas mixture of ozone and oxygen was generated at the anode and hydrogen gas was formed at the cathode; the concentration of ozone in generated anode gas: 11.0 Vol.%, concentration of hydrogen gas in the anode gas: 0.05 Vol.%, and the cell voltage: 3.3 v.
The electrolytic conditions include current density: 1A/cm2 and electrolyte temperature: 30±5 degrees Celsius. Whereas, the electrolytic conditions in the following examples and comparative examples are all identical to those of Example 1.

### EXAMPLE 2

Cathode Sheet B was prepared in such way that an aqueous dispersion of PTFE dispersion and platinum-loaded carbon catalyst was applied with a brush on carbon paper (100 µm thick) surface, followed by drying, and this process was repeated three times to form Cathode Sheet B in porous structure comprising a carbon paper substrate of 110µm thick. The contact angle with the catalyst coating surface of Cathode Sheet B was 95 degrees.
The electrolysis test was conducted as in Example 1, the results of which illustrated the concentration of ozone in the anode gas: 11.4 Vol.%, concentration of hydrogen gas in the anode gas: 0.10 Vol.%, and the cell voltage: 3.3 v.

### EXAMPLE 3

A sintered sheet of titanium fiber, 1 mm thick, was washed with neutral detergent for degreasing and subject to pretreatment by acid pickling with 20 wt% hydrochloric acid solution for one minute at 50 degrees Celsius; then, on the said sintered sheet of titanium fiber, iridium dispersion prepared by dispersing iridium powder (under 200 mesh) in PTFE dispersion was applied with a brush until the final coating amount reached 250 g/m2 as iridium, followed by drying and thus, an iridium coated anode with a sintered sheet of titanium fiber was obtained.
The electrolysis test was conducted as in Example 1, wherein oxygen generated at the anode and hydrogen generated at the cathode and the results of which illustrated the concentration of hydrogen gas in the anode gas: 0.07 Vol.%, and the cell voltage: 2.5 v. For the cathode, Cathode Sheet A in porous structure was used, wherein the contact angle with the catalyst coating surface was 95 degrees

### COMPARATIVE EXAMPLE 1

Cathode Sheet C was prepared in such way that Nafion ( Registered Trade Mark of Du Pont) solution (manufactured by Sigma-Aldrich Japan K.K.) was added to a dispersion prepared by dispersing PTFE dispersion and platinum-loaded carbon catalyst in ethanol, and resultant dispersion was applied with a brush on the surface of carbon paper, 100 µm thick, followed by drying, and this process was repeated five times to form Cathode Sheet C comprising a carbon paper substrate. The contact angle with the catalyst coating surface of Cathode Sheet C with a porous structure was 77 degrees.
The electrolysis test was conducted as in Example 1, the results of which illustrated the concentration of ozone in the anode gas: 11.4 Vol.%, the concentration of hydrogen gas in the anode gas: 0.55 Vol.%, and the cell voltage: 3.2 v.

### COMPARATIVE EXAMPLE 2

Cathode Sheet D was prepared in such way that Nafion ( Registered Trade Mark of Du Pont) solution (manufactured by Sigma-Aldrich Japan K.K.) was added to a dispersion prepared by dispersing PTFE dispersion and platinum-loaded carbon catalyst in ethanol, and resultant dispersion was applied with a brush on a sintered sheet of stainless-steel fiber, 0.5mm thick (manufactured by Nippon Seisen Co., Ltd.), followed by drying, and this process was repeated five times to form Cathode Sheet D comprising a sintered sheet of stainless-steel fiber substrate. The contact angle with the catalyst coating surface of Cathode Sheet D in porous structure was 45 degrees.
The electrolysis test was conducted as in Example 1, the results of which illustrated the concentration of ozone in the anode gas: 11.0 Vol.%, the concentration of hydrogen gas in the anode gas: 0.84 Vol.%, and the cell voltage: 3.1 v.

### COMPARATIVE EXAMPLE 3

Cathode catalyst of platinum coated carbon was prepared in such way that chloroplatinic acid was dissolved in isopropyl alcohol to become 50g/L as platinum and the resultant solution was applied with a brush on one side of a porous carbon plate of 2 mm in thickness, followed by thermal decomposition in reducing flame. The contact angle with the platinum coated surface of the platinum carbon cathode was 28 degrees.
The electrolysis test was conducted as in Example 1, the results of which illustrated the concentration of ozone in the anode gas: 11.0 Vol.%, the concentration of hydrogen gas in the anode gas: 1.5 Vol.%, and the cell voltage: 3.4 v.

### EXAMPLE 4

A long consecutive electrolysis operation was conducted for one year under the same electrolytic conditions as Example 1 and the results of electrolytic performance obtained after one year were compared with Example 1, as tabulated in Table 2. From the comparison, it is found that for a long term stabilized operation, it is extremely effective to prepare the electrode surface to have the contact angle to water of electrode catalyst at 90 degrees or more.

### EXAMPLE 5

Cathode Sheet E of porous structure was prepared in such way that PTFE dispersion (Mitsui DuPont Fluorochemical Co., Ltd. 30-J) that has been diluted 10-fold with ethanol was applied with a brush on Cathode Sheet C, followed by drying, and this process was repeated twice. The contact angle with the catalyst coating surface of Cathode Sheet E in porous structure was improved to 91 degrees.
Then, the electrolysis test was conducted as in Example 1, the results of which illustrated the concentration of ozone in the anode gas: 11.4 Vol.%, the concentration of hydrogen gas in the anode gas: 0.15 Vol.%, and the cell voltage: 3.4v. Viewed from these results, it is found that when said angle reaches 90 degrees or more, the cell voltage shows no rising, the concentration of hydrogen in the anode gas decreases below 0.15 Vol.%, and the purity of anode gas is extremely high.
From Example 5, it is demonstrated that when PTFE dispersion is applied to the surface of Cathode Sheet C wherein the contact angle was 77 degrees and the hydrogen concentration in the anode gas was 0.55 vol.%, the PTFE concentration on the surface is increased and the contact angle is also increased to 91 degrees, and then, the hydrogen concentration in the anode gas can be suppressed to 0.15 vol.%.

Table 1 shows the results of said Examples 1, 2, 3, and 5 and Comparative Examples 1, 2 and 3. From these results, it has been proven that when said contact angle becomes 90 degrees or more, the cell voltage does not show any significant rising, the transfer of hydrogen gas or oxygen gas generated in the cathode or the anode into the counter electrode through the cation exchange membrane is suppressed, the gas purity is improved and safety electrolysis operation is secured for a long time.

**Table 1-1 Composition and Effect of Water Electrolysis System in Examples and Comparative Examples**

| | | Example 1 | Example 2 | Example 3 |
|---|---|---|---|---|
| | | Cathode Sheet A | Cathode Sheet B | Cathode Sheet A |
| Anode Catalyst | | Lead Dioxide | Lead Dioxide | Iridium Powder |
| Cathode Catalyst | | Platinum-loaded Carbon | Platinum-loaded Carbon | Platinum-loaded Carbon |
| Mixture of cathode catalyst | | PTFE Dispersion | PTFE Dispersion | PTFE Dispersion |
| Cathode Substrate or Cathode Current Collector | | Sintered sheet of stainless-steel fiber | Carbon Paper, Sintered sheet of stainless-steel fiber | Carbon Paper, Sintered sheet of stainless-steel fiber |
| Anode Gas | | Oxygen/Ozone | Oxygen/Ozone | Oxygen |
| Cathode Gas | | Hydrogen | Hydrogen | Hydrogen |
| Contact Angle with Cathode Surface | Deg. | 92 | 95 | 95 |
| Hydrogen Concentration in Anode Gas | Vol.% | 0.05 | 0.10 | 0.07 |
| Cell Voltage | V | 3.3 | 3.3 | 2.5 |

Table 1-2

**Table 1-2 Composition and Effect of Water Electrolysis System in Examples and Comparative Examples**

| | | Comparative Example 1 | Comparative Example 2 | Comparative Example 3 |
|---|---|---|---|---|
| | | Cathode Sheet C | Cathode Sheet D | |
| Anode Catalyst | | Lead Dioxide | Lead Dioxide | Lead Dioxide |
| Cathode Catalyst | | Platinum-loaded Carbon | Platinum-loaded Carbon | Thermally-decomposed Platinum |
| Mixture of cathode catalyst | | PTFE Dispersion, Nafion ( Registered Trade Mark of Du Pont) Solution | PTFE Dispersion, Nafion ( Registered Trade Mark of Du Pont) Solution | None |
| Cathode Substrate or Cathod e Current Collector | | Carbon Paper, Sintered sheet stainless-steel fiber | of Sintered sheet of stainless-steel fiber 2 sheets | Porous Carbon Plate |
| Anode Gas | | Oxygen/Ozone | Oxygen/Ozone | Oxygen/Ozone |
| Cathode Gas | | Hydrogen | Hydrogen | Hydrogen |
| Contact Angle with Cathode Surface | Deg. | 77 | 45 | 28 |
| Hydrogen Concentration in Anode Gas | Vol.% | 0.55 | 0.84 | 1.55 |
| Cell Voltage | V | 3.2 | 3.1 | 3.4 |

**Table 1-3 Composition and Effect of Water Electrolysis System in Examples and Comparative Examples**

| | | Example 5 |
|---|---|---|
| | | Cathode Sheet E |
| Anode Catalyst | | Lead Dioxide |
| Cathode Catalyst | | Platinum-loaded Carbon |
| Mixture of cathode catalyst | | PTFE Dispersion, Nafion ( Registered Trade Mark of Du Pont) Solution +PTFE dispersion |
| Cathode Substrate or Cathode Current Collector | | Carbon Paper, Sintered sheet of stainless-steel fiber |
| Anode Gas | | Oxygen/Ozone |
| Cathode Gas | | Hydrogen |
| Contact Angle with Cathode Surface | Deg. | 91 |
| Hydrogen Concentration in Anode Gas | Vol.% | 0.15 |
| Cell Voltage | V | 3.3 |

Table 2 shows the results of Example 4. As a result, it has been proven that in case of said contact angle at 92 degrees, the cell voltage has not risen even after a long time operation of one year, and the concentration of hydrogen in the anode gas has been kept at extremely low levels, compared with the case of said contact angle at 77 degrees.

**Table 2 <Example 4> Comparison of Effects of Start Up vs. One Year-After**

| | | Example 1 | Comparative Example 1 |
|---|---|---|---|
| Cell Voltage (V) | Start Up | 3.3 | 3.2 |
| | One Year-After | 3.1 | 3 |
| Ozone Gas Concentration (Vol.%) | Start Up | 11 | 11.4 |
| | One Year-After | 11.7 | 11.2 |
| Hydrogen Concentration in Anode gas (Vol.%) | Start Up | 0.05 | 0.55 |
| | One Year-After | 0.5 | 1.62 |

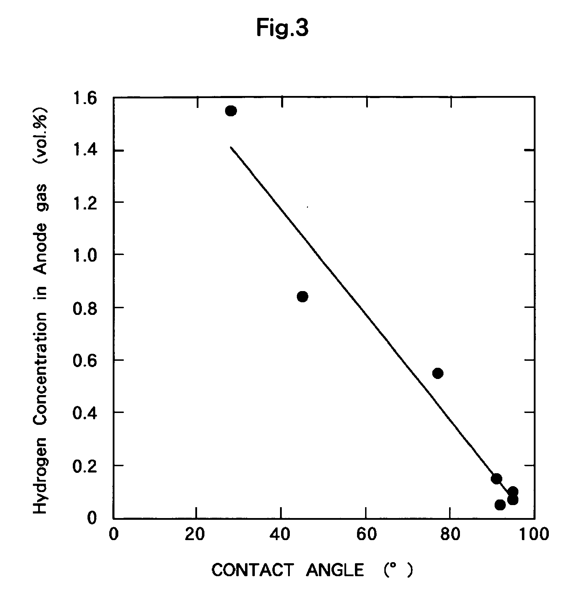

Table 3 and Figure 3 show the relation of contact angle vs. hydrogen concentration in anode gas of Cathode Sheet 4 among the results from Examples 1, 2, 3 and 5, and Comparative Examples 1, 2, and 3. From these results, it has been proven that when said contact angle is 90 degrees or more, the concentration of hydrogen in the anode gas becomes 0.15 vol.% or below and the purity of the anode gas is extremely high.

**Table 3 Relation of Contact Angle vs. Hydrogen Concentration in Anode Gas**

| Contact Angle (Degree) | Hydrogen Conc. in Anode Gas (Vol.%) | |
|---|---|---|
| 92 | 0.05 | Example 1 |
| 95 | 0.1 | Example 2 |
| 95 | 0.07 | Example 3 |
| 91 | 0.15 | Example 5 |
| 77 | 0.55 | Comparative Example 1 |
| 45 | 0.84 | Comparative Example 2 |
| 28 | 1.55 | Comparative Example 3 |

As mentioned above, the water electrolysis system by the present invention can suppress the transfer of hydrogen gas or oxygen gas generated at the cathode or the anode into the counter electrode through the cation exchange membrane, improve the gas quality and achieve safe electrolysis operation for a long time.

This application claims the priorities of Japanese Patent Application 2007-116670 filed April 26, 2007 the teachings of which are incorporated herein by reference in their entirety.

## Claims

1. A water electrolysis system having an anode catalyst layer containing anode catalyst and a cathode catalyst layer containing cathode catalyst tightly attached, respectively, to each surface of a solid polymer electrolyte membrane comprising a cation exchange membrane, wherein at least one catalyst layer of said anode catalyst layer and cathode catalyst layer comprises a porous structure of anode catalyst or cathode catalyst dispersed in fluorine resin containing resin, featuring the surface of the anode catalyst layer or the cathode catalyst layer being hydrophobized and the water contact angle with the surface of the anode catalyst layer or the cathode catalyst layer of said porous structure being 90 degrees or more.

2. A water electrolysis system according to Claim 1, in which the fluorine resin containing resin used for said porous structure is polytetrafluoroethylene.

3. A water electrolysis system according to Claim 1, in which the catalyst layer comprising said porous structure is a cathode catalyst layer containing cathode catalyst.

4. A water electrolysis system according to Claim 2, in which said cathode catalyst layer comprises a porous structure of platinum or platinum-loaded carbon grain dispersed in fluorine resin containing resin.

5. A water electrolysis system according to Claim 1, in which the porous structure comprises a porous metal plate or a sintered sheet of metallic fiber having on its surface anode catalyst containing lead dioxide or iridium in said anode catalyst layer.

6. A water electrolysis system according to Claim 3, in which the catalyst layer comprising said porous structure has a layer coated with fluorine resin layer on the surface of said cathode catalyst layer.
